# EUROPÄISCHE PATENTSCHRIFT

(11) **EP 3 233 395 B1**
(45) Veröffentlichungstag und Bekanntmachung des Hinweises auf die Patenterteilung: **04.06.2025**
(21) Anmeldenummer: 15817070.4
(22) Anmeldetag: 15.12.2015
(51) Int. Cl.: B25J 9/16

(54) **VERFAHREN UND VORRICHTUNG ZUM STEUERN EINER ANTRIEBSANORDNUNG ZUM BEWEGEN EINES, INSBESONDERE ROBOTERGEFÜHRTEN, WERKZEUGS**
METHOD AND DEVICE FOR CONTROLLING A DRIVE ARRANGEMENT FOR MOVING A TOOL, IN PARTICULAR A ROBOT-GUIDED TOOL
PROCÉDÉ ET DISPOSITIF DE COMMANDE D'UN SYSTÈME D'ENTRAÎNEMENT POUR METTRE EN MOUVEMENT UN OUTIL, NOTAMMENT GUIDÉ PAR UN ROBOT

(30) Priorität: 19.12.2014 DE 102014019187
(43) Veröffentlichungstag der Anmeldung: 25.10.2017
(73) Patentinhaber: KUKA Deutschland GmbH, 86165 Augsburg (DE)
(72) Erfinder: PECHER, Franz, 86199 Augsburg (DE); BAUM, Sascha, 86316 Friedberg (DE); KOEPF, Christian, 86150 Augsburg (DE); HEIDRICH, Poldi, 87616 Marktoberdorf (DE); MARTIN, Stefan, 86167 Augsburg (DE); STIMMEL, Burkhard, 82547 Achmühle (DE)
(74) Vertreter: Schlotter, Alexander Carolus Paul
(86) Internationale Anmeldenummer: PCT/EP2015/002522
(87) Internationale Veröffentlichungsnummer: WO 2016/096123

(56) Entgegenhaltungen:
- EP-A1- 1 477 284
- EP-A2- 1 166 960
- WO-A1-2004/113011
- DE-A1- 102006 016 196
- GB-A- 2 355 547
- JP-A- 2002 355 782

## Beschreibung

Die vorliegende Erfindung betrifft ein Verfahren und eine Vorrichtung zum Steuern einer Antriebsanordnung mit wenigstens einem Antrieb zum Bewegen eines, insbesondere robotergeführten, Werkzeugs sowie ein System mit der Vorrichtung und ein Computerprogrammprodukt zur Durchführung des Verfahrens.

Aus der DE 10 2011 003 539 A1 ist ein Verfahren zum Referenzieren einer Antriebsstellung eines elektrischen Antriebs wenigstens einer Zangenhälfte einer Fertigungszange bekannt, bei dem mittels Ausgleichsrechnung eine Regressionsgerade einer Zeit-Schleppfehler-Funktion bestimmt wird, wobei eine Schließposition der Zangenhälfte auf Basis eines Nulldurchgangs dieser Geraden bestimmt wird. Aus der WO 2004/113001 A1 ist ein Verfahren zur Steuerung und/oder Regelung einer Schweißzangenbewegung bekannt, wobei eine erste Antriebsvorrichtung Elektrodenhalter mit einer vorgegebenen Druckkraft auf ein zu schweißendes Werkstück presst. Dabei variiert eine zweite Antriebsvorrichtung die räumliche Position der Elektrodenhalter. Aus der EP1166960 A2 ist eine Verarbeitungsmaschine mit der Funktion, sensitiv Kollisionen oder andere Abnormalitäten zu detektieren, bekannt. Dabei wird eine Abnormalität einer Last erfasst, wenn diese ein Abnormalitäserfassungsniveau übersteigt, das auf Basis der Last bestimmt wird, die während eines vorhergehenden Betriebs gemessen worden ist. Die GB2355547 A offenbart eine Steuerung eines Roboterarms, wenn eine Kollision erfasst wird, wobei eine Kollision durch Bestimmen der Abweichung des aktuellen Stroms in jedem Servomotor des Arms von dem logischen Strom erfasst wird. Wenn diese Abweichung einen vorgegebenen Referenzwert übersteigt, wird entschieden, dass eine Kollision aufgetreten ist. In der JP2002355782 A schätzt ein Verfahren eine Arbeitskraft an einem Roboterflansch ab, der ein erstes Teil am Roboterflansch mit einem zweiten Teil auf einem Arbeitstisch in Kontakt bringt. Ein Kraftsensor unter dem Arbeitstisch berechnet einen Messwert, wenn das erste und zweite Teil in Kontakt kommen. EP1477284 A1 offenbart eine Antriebssteuerung mit einer Kollisionserkennung, die so konfiguriert ist, dass sie eine Kollision eines angetriebenen Elements auf der Grundlage einer geschätzten Geschwindigkeitsabweichung von einer tatsächlichen Geschwindigkeit erkennt.

Aufgabe der vorliegenden Erfindung ist es, den Betrieb eines, insbesondere robotergeführten, Werkzeugs zu verbessern.

Diese Aufgabe wird durch ein Verfahren mit den Merkmalen des Anspruchs 1 gelöst. Ansprüche 11-13 stellen eine Vorrichtung bzw. ein Computerprogrammprodukt zur Durchführung eines hier beschriebenen Verfahrens bzw. ein System mit einer hier beschriebenen Vorrichtung unter Schutz. Die Unteransprüche betreffen vorteilhafte Weiterbildungen.

Eine bevorzugte Anwendung ist die Steuerung einer, insbesondere robotergeführten, Zange, insbesondere Greif- oder Schweißzange. Entsprechend ist in einer Weiterbildung ein erfasster Kontakt ein Kontakt einer, insbesondere verstellbaren, Zangenbacke, insbesondere mit einem Bauteil oder einer weiteren Zangenbacke. Die vorliegende Erfindung wird nachfolgend insbesondere anhand dieser bevorzugten Anwendung erläutert, ohne jedoch hierauf beschränkt zu sein. Gleichermaßen kann das Werkzeug entsprechend auch ein(en) Bohrer, Fräser oder dergleichen aufweisen, insbesondere sein.

In einer Ausführung ist bzw. wird ein Werkzeug durch einen, insbesondere elektrischen, pneumatischen und/oder hydraulischen, Werkzeugantrieb bewegbar bzw. bewegt. Insbesondere kann ein Zangenantrieb die Zangenbacke gegen eine weitere Zangenbacke verstellen. Zusätzlich oder alternativ ist bzw. wird ein Werkzeug durch einen mehr-, insbesondere sechsachsigen Roboter bewegbar bzw. bewegt. Entsprechend umfasst die Antriebsanordnung in einer Ausführung einen oder mehrere Werkzeugantriebe, insbesondere zum Verstellen der Zangenbacke gegen eine weitere Zangenbacke, und/oder einen oder mehrere Roboterantriebe zum Bewegen des Werkzeugs, sie kann insbesondere aus dem bzw. den Werkzeugantrieb(en) und/oder Roboterantrieb(en) bestehen.

Auf Basis einer Erfassung eines Überschreitens eines ersten Schwellwertes durch die Kenngröße kann in einer Ausführung ein Kontakt des Werkzeugs vorteilhaft erfasst werden, insbesondere kraft- und/oder drehmomentsensorlos und/oder bei oder, insbesondere unmittelbar, nach einem Kontaktieren, insbesondere während eines anschließenden planmäßigen Aufprägens einer Kontaktkraft durch das Werkzeug.

Die Kenngröße kann in einer Ausführung einen Positions-, Geschwindigkeits- und/oder Beschleunigungsschleppfehler aufweisen, insbesondere ein solcher Schleppfehler sein. Unter einem Schleppfehler wird vorliegend insbesondere eine Abweichung eines, insbesondere erfassten, Ist-Wertes von einem, insbesondere vorgegebenen, Soll-Wert verstanden.

In einer Weiterbildung weist die Kenngröße einen Positionsschleppfehler bzw. eine Abweichung zwischen einer Ist- und einer Soll-Position bzw. -Stellung eines oder mehrerer Antriebe der Antriebsanordnung auf, insbesondere kann die Kenngröße ein solcher Positionsschleppfehler sein. Diese (Achs- bzw. Gelenk)Positionen können vorteilhafterweise direkt und/oder präzise erfasst werden.

Zusätzlich oder alternativ weist die Kenngröße in einer Weiterbildung einen Positionsschleppfehler bzw. eine Abweichung zwischen einer Ist- und einer Soll-Position des Werkzeugs, insbesondere seiner ein-, zwei- oder dreidimensionalen Lage und/oder Orientierung relativ zu einer, insbesondere umgebungs- oder roboterfesten, Referenz auf, insbesondere kann die Kenngröße ein solcher Positionsschleppfehler sein. Diese (kartesischen bzw. Arbeitsraum)Positionen können insbesondere durch Transformation von Positionen der Antriebsanordnung erfasst werden.

Zusätzlich oder alternativ weist die Kenngröße in einer Weiterbildung einen Geschwindigkeitsschleppfehler bzw. eine Abweichung zwischen einer Ist- und einer Soll-Geschwindigkeit eines oder mehrerer Antriebe der Antriebsanordnung auf, insbesondere kann die Kenngröße ein solcher Geschwindigkeitsschleppfehler sein. Zusätzlich oder alternativ weist die Kenngröße in einer Weiterbildung einen Geschwindigkeitsschleppfehler bzw. eine Abweichung zwischen einer Ist- und einer Soll-Geschwindigkeit des Werkzeugs, insbesondere seiner ein-, zwei- oder dreidimensionalen Translation und/oder Rotation relativ zu einer, insbesondere umgebungs- oder roboterfesten, Referenz auf, insbesondere kann die Kenngröße ein solcher Geschwindigkeitsschleppfehler sein. Geschwindigkeiten können vorteilhafterweise direkt und/oder präzise erfasst werden und/oder ändern sich vorteilhafterweise aufgrund eines Kontaktes deutlicher und/oder sind vorteilhafterweise weniger verrauscht.

Zusätzlich oder alternativ weist die Kenngröße in einer Weiterbildung einen Beschleunigungsschleppfehler bzw. eine Abweichung zwischen einer Ist- und einer Soll-Beschleunigung eines oder mehrerer Antriebe der Antriebsanordnung auf, insbesondere kann die Kenngröße ein solcher Beschleunigungsschleppfehler sein. Zusätzlich oder alternativ weist die Kenngröße in einer Weiterbildung einen Beschleunigungsschleppfehler bzw. eine Abweichung zwischen einer Ist- und einer Soll-Beschleunigung des Werkzeugs, insbesondere seiner ein-, zwei- oder dreidimensionalen translatorischen und/oder rotatorischen Beschleunigung relativ zu einer, insbesondere umgebungs- oder roboterfesten, Referenz auf, insbesondere kann die Kenngröße ein solcher Beschleunigungsschleppfehler sein. Beschleunigungen können vorteilhafterweise direkt und/oder präzise erfasst werden und/oder ändern sich aufgrund eines Kontaktes vorteilhafterweise besonders deutlich. Die Kenngröße kann in einer Ausführung eine, insbesondere aufgenommene, Leistung und/oder deren Änderung, insbesondere einen Stromwert und/oder dessen Änderung, eines oder mehrerer Antriebe der Antriebsanordnung aufweisen, insbesondere eine solche Leistung bzw. Änderung sein bzw. angeben.

Das erfinderische Verfahren nach Anspruch 1 weist unter anderem die Schritte auf:
c) Erfassen eines Überschreitens eines zweiten Schwellwertes, der größer als der erste Schwellwert ist, durch die Kenngröße; und
d) Erfassen des Kontakts des Werkzeugs auf Basis des letzten bzw. zuletzt erfassten Überschreitens des ersten Schwellwertes, falls anschließend ein Überschreiten des zweiten Schwellwertes durch die Kenngröße erfasst wird.

Mit anderen Worten wird in Schritt d) der Kontakt des Werkzeugs auf Basis des letzten Überschreitens des ersten Schwellwertes erfasst, falls anschließend ein Überschreiten des zweiten, größeren Schwellwertes durch die Kenngröße erfasst wird.

Entsprechend weist die Vorrichtung Mittel auf zum Erfassen eines Überschreitens eines zweiten Schwellwertes, der größer als der erste Schwellwert ist, durch die Kenngröße, wobei die Mittel zum Erfassen eines Kontakts des Werkzeugs auf Basis des Überschreitens des ersten Schwellwertes Mittel zum Erfassen des Kontakts des Werkzeugs auf Basis des letzten Überschreitens des ersten Schwellwertes, falls anschließend ein Überschreiten des zweiten Schwellwertes durch die Kenngröße erfasst wird, sind.

Hierdurch können vorteilhaft ein sensitiveres und ein robusteres Kriterium kombiniert werden. Dadurch kann einerseits, auf Basis des sensitiveren Kriteriums bzw. eines Überschreitens des ersten Schwellwertes, ein Kontakt präziser erfasst werden. Zugleich kann andererseits das robustere Kriterium bzw. die Notwendigkeit eines Überschreitens des zweiten Schwellwertes die Gefahr eines fehlerhaften Ansprechens des sensitiveren Kriteriums, beispielsweise infolge von Rauschen, Reibungs- und/oder Trägheitseffekten oder dergleichen, reduzieren.

Insbesondere wird somit jeweils ein Zeitpunkt oder eine Position erfasst, insbesondere abgespeichert, bei dem die Kenngröße (zuletzt) den ersten Schwellwert überschritten hat. Falls anschließend auch die Kenngröße den zweiten Schwellwert überschreitet, kann mit sehr hoher Wahrscheinlichkeit davon ausgegangen werden, dass das unmittelbar vorhergehende letzte Überschreiten des ersten Schwellwertes durch einen Kontakt des Werkzeugs bedingt war. In einer Weiterbildung wird ein Zeitpunkt oder eine Position, bei bzw. an dem bzw. der die Kenngröße den ersten Schwellwert überschreitet, jeweils in der Art eines Schieberegisters als ein(e) aktuelle(r) potentielle(r) Kontakt(-Position) erfasst, insbesondere abgespeichert, und der bzw. die jeweils aktuelle bzw. zuletzt erfasste, insbesondere abgespeicherte, potentielle Kontakt(-Position) als aktuelle(r) Kontakt(-Position) erfasst, insbesondere abgespeichert, falls anschließend auch die Kenngröße auch den zweiten Schwellwert überschreitet.

Allgemein kann in einer Ausführung ein Zeitpunkt und/oder eine Position der Antriebsanordnung, insbesondere eine Stellung einer oder mehrerer Antriebe der Antriebsanordnung, und/oder eine Position, insbesondere Lage und/oder Orientierung, des Werkzeugs, als Kontakt(-Position) erfasst werden, bei bzw. an dem bzw. der die Kenngröße den ersten Schwellwert überschreitet bzw. ein Überschreitens des ersten Schwellwertes erfasst worden ist.

Der erste und/oder zweite Schwellwert wird in einer Ausführung auf Basis eines, insbesondere gleitenden, Mittel- oder Maximalwertes der Kenngröße und/oder während einer planmäßig kontaktfreien oder potentiell kontaktierenden Bewegung des Werkzeugs ermittelt.

Entsprechend weist in einer Ausführung die Vorrichtung Mittel auf zum Ermitteln des ersten und/oder zweiten Schwellwerts auf Basis eines, insbesondere gleitenden, Mittel- oder Maximalwertes der Kenngröße und/oder während einer planmäßig kontaktfreien oder potentiell kontaktierenden Bewegung des Werkzeugs.

Der Schwellwert kann dabei insbesondere einen vorgegebenen Offset gegenüber dem Mittel- oder Maximalwert der Kenngröße aufweisen. Ein gleitender Mittel- bzw. Maximalwert wird in einer Ausführung durch Ermitteln eines Mittel- bzw. Maximalwertes für einen einem aktuellen Zustand vorhergehenden und mit dem aktuellen Zustand mitwandernden Abschnitt eines, insbesondere zeitlichen oder inkrementellen, Verlaufs der Kenngröße ermittelt.

In einer Weiterbildung wird während einer planmäßig kontaktfreien Bewegung des Werkzeugs, insbesondere in einer Referenzphase, ein Mittel- oder Maximalwert der Kenngröße ermittelt, der sich beispielsweise infolge von Trägheiten, Reibung, Rauschen oder dergleichen ergibt. Dieser Wert, insbesondere erhöht um einen vorgegebenen Offset, kann dann als, insbesondere erster, Schwellwert verwendet werden, da davon ausgegangen werden kann, dass eine Überschreitung dieses, insbesondere um den vorgegebenen Offset erhöhten, Wertes während einer an die Referenzphase anschließenden planmäßig potentiell kontaktierenden Bewegung des Werkzeugs bzw. Detektionsphase aus einem Kontakt des Werkzeugs resultiert.

In einer Weiterbildung wird der erste Schwellwert auf Basis eines, insbesondere gleitenden, Mittelwertes ermittelt, insbesondere durch Filterung der Kenngröße. Diese schwankt, beispielsweise infolge von Trägheiten, Reibung, Rauschen oder dergleichen, um den Mittelwert. Dieser Mittelwert, insbesondere erhöht um einen vorgegebenen Offset, kann dann als erster Schwellwert verwendet werden, da ein Kontakt des Werkzeugs zu einer Überschreitung dieses, insbesondere um den vorgegebenen Offset erhöhten, Wertes führt.

Der zweite Schwellwert kann in einer Weiterbildung in gleicher Weise ermittelt werden, insbesondere durch Erhöhen des Mittel- oder Maximalwerts um einen größeren Offset, um so ein robusteres Kriterium zur Verfügung zu stellen, das das sensitivere Kriterium verifiziert und so die Gefahr einer fälschlichen Erfassung eines Kontakts durch das sensitivere Kriterium reduziert.

In einer Weiterbildung wird der erste und/oder zweite Schwellwert als fester Wert vorab bzw. mittel- und/oder maximalwertunabhängig ermittelt bzw. vorgegeben.

Eine erfasste Kontakt-Position kann insbesondere dazu verwendet werden, eine Kontaktkraft des Werkzeugs zu ermitteln und/oder vorzugeben: wird das Werkzeug nach einem Kontakt weiter in Kontaktrichtung bewegt, prägt es eine von seiner Steifigkeit c und einer bewegungsbedingten Abweichung x-x₀ seiner Ist-Position x von seiner Kontakt-Position x₀ abhängige, zunehmende Kontaktkraft F auf seinen Kontaktpartner auf (F = c·(x-x₀)).

Daher wird in einer Ausführung eine Kontaktkraft des Werkzeugs auf Basis einer Abweichung einer Ist-Position von einer Kontakt-Position ermittelt und/oder vorgegeben, bei welcher der Kontakt erfasst worden ist. Entsprechend weist in einer Ausführung die Vorrichtung Mittel auf zum Ermitteln und/oder Vorgeben einer Kontaktkraft des Werkzeugs auf Basis einer Abweichung einer Ist-Position von einer Kontakt-Position, bei welcher der Kontakt erfasst worden ist.

Wird der Kontakt auf Basis der Kenngröße erfasst, prägt das Werkzeug bereits eine gewisse Kontaktkraft auf, die den Schleppfehler bzw. die Leistung(sänderung) der Antriebsanordnung bewirken. Nach einem Aspekt der vorliegenden Erfindung wird diese Kontaktkraft, die bei Erfassen des Kontakts bereits wirkt, bei der Ermittlung bzw. Vorgabe der Kontaktkraft des Werkzeugs berücksichtigt, insbesondere als, insbesondere konstanter, Offset. Entsprechend wird in einer Ausführung die Kontaktkraft auf Basis eines von Null verschiedenen Kontaktkraft-Offsets in der Kontakt-Position ermittelt bzw. vorgegeben bzw. ist das Mittel zum Ermitteln und/oder Vorgeben einer Kontaktkraft des Werkzeugs hierzu eingerichtet.

In einer Weiterbildung wird vorab eine Kontaktkraft-Kennlinie kalibriert, auf deren Basis die Kontaktkraft des Werkzeugs ermittelt bzw. vorgegeben wird, wobei die Kontaktkraft-Kennlinie den vorstehend erläuterten Kontaktkraft-Offset aufweist. Zum Kalibrieren wird in einer Ausführung in der hier beschriebenen Weise eine Kontakt-Position erfasst, anschließend das Werkzeug in verschiedene Ist-Positionen bewegt, und dabei jeweils die Abweichung der Ist-Position von der Kontakt-Position sowie, insbesondere durch eine Kraftmesseinrichtung, eine zugehörige Kontaktkraft des Werkzeugs erfasst. Der Kontaktkraft-Offset kann insbesondere beim Erfassen des Kontaktes oder durch Extrapolation einer Ausgleichskurve durch Paare von Abweichungen der Ist-Position von der Kontakt-Position und dabei erfassten Kontaktkräften ermittelt werden.

In einer Ausführung wird das Werkzeug während des Verfahrens, insbesondere positions- und/oder geschwindigkeitsgeregelt, bewegt, insbesondere mit konstanter Soll-Geschwindigkeit.

Nach einem Aspekt der vorliegenden Erfindung weist ein System ein hier beschriebenes Werkzeug, eine hier beschriebene Antriebsanordnung zum Bewegen des Werkzeugs, und eine hier beschriebene Vorrichtung zum Steuern der Antriebsanordnung auf. Nach einem Aspekt der vorliegenden Erfindung weist ein Computerprogrammprodukt Programmcode zur Durchführung eines hier beschriebenen Verfahrens auf, der auf einem von einem Computer lesbaren Medium gespeichert ist.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die Antriebsanordnung steuern kann.

Weitere Vorteile und Merkmale ergeben sich aus den Unteransprüchen und den Ausführungsbeispielen. Hierzu zeigt, teilweise schematisiert,:
- Fig. 1:: ein System nach einer Ausführung der vorliegenden Erfindung;
- Fig. 2:: ein Verfahren nach einer Ausführung der vorliegenden Erfindung;
- Fig. 3:: den Verlauf einer Kenngröße bei dem Verfahren; und
- Fig. 4:: eine bei dem Verfahren verwendete Kontaktkraft-Kennlinie.

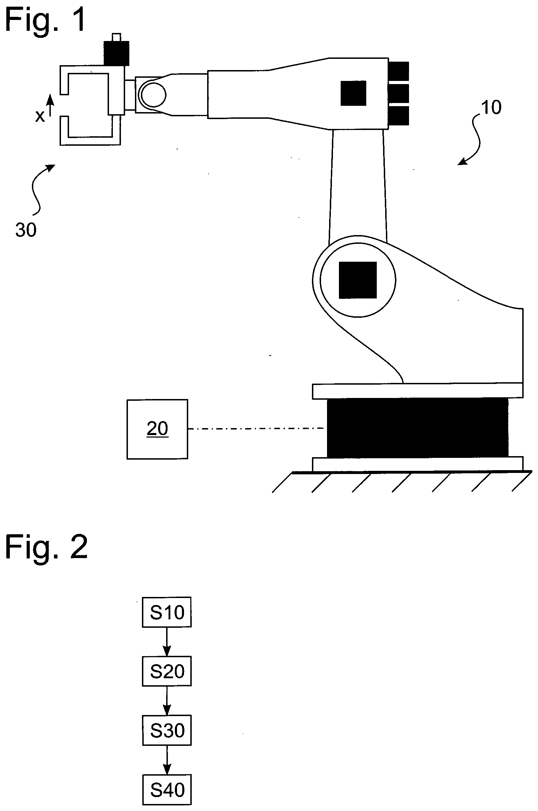

Fig. **1** zeigt ein System nach einer Ausführung der vorliegenden Erfindung mit einem durch einen Roboter 10 geführten Werkzeug in Form einer Schweißzange mit einer verstellbaren Zangenbacke bzw. Elektrode 30 und einer Vorrichtung 20 zum Steuern einer in Fig. 1 dunkel ausgefüllt angedeuteten Antriebsanordnung zum Bewegen des Werkzeugs, die Antriebe des Roboters und/oder einen Werkzeug- bzw. Zangenantrieb zum Verstellen der beweglichen Zangenbacke umfasst.

Die Vorrichtung 20 führt ein Verfahren nach einer Ausführung der vorliegenden Erfindung durch bzw. ist hierzu programmtechnisch eingerichtet, das nachfolgend mit Bezug auf Fig. 2 bis 4 näher erläutert wird. Dabei wird die Zange positions- und/oder geschwindigkeitsgeregelt mit konstanter Soll-Geschwindigkeit geschlossen.

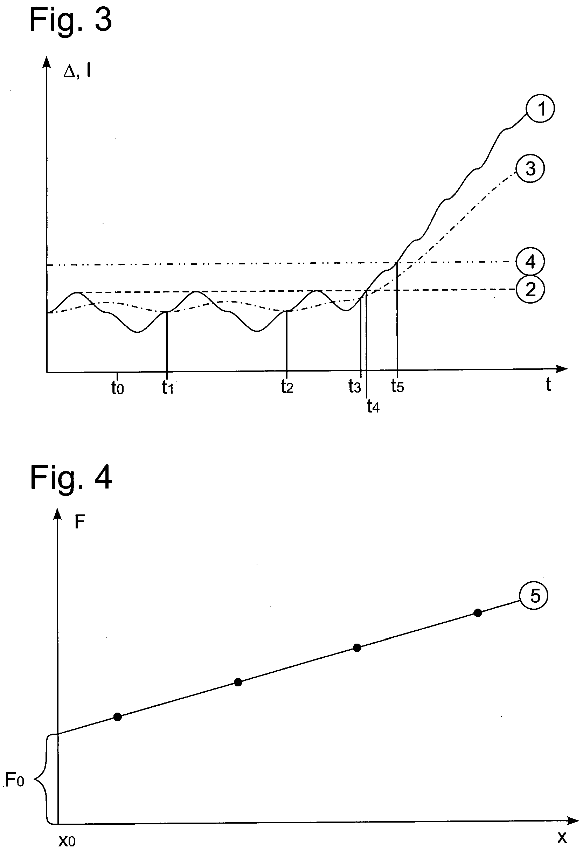

In einem Schritt S10 (vgl. Fig. 2) wird eine Kenngröße, im Ausführungsbeispiel ein Geschwindigkeitsschleppfehler Δ oder ein Motorstrom I des Zangenantriebs, erfasst, deren Verlauf über der Zeit t in Fig. 3 als durchgezogene Linie ① angedeutet ist.

Zusätzlich wird in Schritt S10 während einer Referenzphase einer planmäßig kontaktfreien Bewegung des Werkzeugs, die bis zum Zeitpunkt t₀ dauert, ein Maximalwert der Kenngröße als erster Schwellwert ermittelt. Der erste Schwellwert ② ist in Fig. 3 gestrichelt angedeutet.

Dann wird in einem Schritt S20 während einer planmäßig potentiell kontaktierenden Bewegung des Werkzeugs (t > t₀) ein Überschreiten des ersten Schwellwertes durch die Kenngröße erfasst, im Ausführungsbeispiel zum Zeitpunkt t₄.

Dieser Zeitpunkt bzw. die Position des Zangenantriebs zu diesem Zeitpunkt t₄ wird in einem Schritt S30 als Kontakt(-Position) x₀ des Werkzeugs erfasst.

In einer Abwandlung wird in Schritt S10 der erste Schwellwert auf Basis eines gleitenden Mittelwertes der Kenngröße ermittelt, indem der Mittelwert um einen vorgegebenen Offset erhöht wird. Dieser alternative erste Schwellwert ③ ist in Fig. 3 strich-punktiert angedeutet. Er wird insbesondere auch während der planmäßig potentiell kontaktierenden Bewegung des Werkzeugs ermittelt (t > t₀).

Zusätzlich wird in der Abwandlung in Schritt S10 ein zweiter Schwellwert ④ ermittelt, der in Fig. 3 exemplarisch als fest vorgegebener Wert strich-doppelpunktiert angedeutet ist.

In der Abwandlung wird dann in Schritt S20 jeweils ein letztes Überschreiten des ersten Schwellwertes ③ durch die Kenngröße erfasst, im Ausführungsbeispiel der Fig. 3 zu den Zeitpunkten t₁, t₂ und zuletzt t₃. Das jeweils letzte Überschreiten des ersten Schwellwertes wird in der Art eines Schieberegisters als aktueller potentieller Kontakt bzw. als aktuelle potentielle Kontakt-Position erfasst, insbesondere abgespeichert.

Zusätzlich wird in der Abwandlung in Schritt S20 ein Überschreiten des zweiten Schwellwertes ④ durch die Kenngröße erfasst, im Ausführungsbeispiel zum Zeitpunkt t₅.

Dann wird in der Abwandlung in Schritt S30 der Zeitpunkt des letzten Überschreitens des ersten Schwellwertes ③ bzw. die Position des Zangenantriebs zu diesem Zeitpunkt als Kontakt(-Position) des Werkzeugs erfasst, falls anschließend auch das Überschreiten des zweiten Schwellwertes ④ durch die Kenngröße erfasst wird.

Im Ausführungsbeispiel ist der Zeitpunkt des letzten Überschreitens des ersten Schwellwertes ③, bevor anschließend auch das Überschreiten des zweiten Schwellwertes ④ durch die Kenngröße erfasst wird, der Zeitpunkt t₃. Entsprechend wird in der Abwandlung dieser Zeitpunkt t₃ bzw. die Position des Zangenantriebs zu diesem Zeitpunkt als Kontakt(-Position) des Werkzeugs erfasst.

Man erkennt durch den Vergleich der zunächst beschriebenen Ausführung mit der Abwandlung, dass durch das sensitivere Kriterium, nämlich dem Überschreiten des ersten Schwellwertes ③, der Kontakt präziser erfasst wird, insbesondere zu einem früheren Zeitpunkt t₃ verglichen mit dem Zeitpunkt t₄ der zunächst beschriebenen Ausführung, während zugleich aufgrund der Kombination mit dem robusteren Kriterium, nämlich dem Überschreiten des zweiten Schwellwertes ④, die Gefahr einer fälschlichen Erfassung eines Kontakts, beispielsweise aufgrund von Rauschen, reduziert ist.

In einem Schritt S40 wird anschließend eine Kontaktkraft F des Werkzeugs auf Basis einer Abweichung einer Ist-Position x von einer Kontakt-Position x₀ ermittelt und/oder vorgegeben, bei welcher der Kontakt erfasst worden ist. Dabei wird, wie in Fig. 4 angedeutet, die Kontaktkraft F auf Basis einer Kontaktkraft-Kennlinie ⑤ ermittelt bzw. vorgegeben, die in der Kontakt-Position x₀ einen von Null verschiedenen Kontaktkraft-Offset F₀ aufweist.

Diese Kontaktkraft-Kennlinie und insbesondere der Kontaktkraft-Offset kann durch ein vorstehend beschriebenes Erfassen einer Kontakt-Position, eine anschließende Erfassung mehrerer Ist-Positionen x bzw. deren Abweichung von der Kontakt-Position x₀, und dabei wirkender Kontaktkräfte kalibriert werden, wie in Fig. 4 durch ausgefüllte Kreise angedeutet, die Mess- bzw. Erfassungspunkte symbolisieren.

Die Vorrichtung 20 bildet Mittel im Sinne der vorliegenden Erfindung bzw. weist solche auf, und ist dadurch zur Durchführung des hier beschriebenen Verfahrens eingerichtet.

Der Schutzbereich der Erfindung ist durch nachfolgende Ansprüche 1-13 definiert.

### Bezugszeichenliste

- ①: Kenngröße (Geschwindigkeitsschleppfehler Δ; Motorstrom I)
- ②; ③: erster Schwellwert
- ④: zweiter Schwellwert
- ⑤: Kontaktkraft-Kennlinie
- 10: Roboter
- 20: Steuervorrichtung
- 30: Schweißzange (Werkzeug)
- t: Zeit
- x: Position

## Patentansprüche

1. Verfahren zum Steuern einer Antriebsanordnung mit wenigstens einem Antrieb zum Bewegen eines robotergeführten Werkzeugs (30), wobei das Werkzeug bewegt wird und das Verfahren die Schritte aufweist:
a) Erfassen (S10) einer Kenngröße (①), die einen Schleppfehler (Δ) und/oder eine Leistung (I) und/oder deren Änderung aufweist;
b) Erfassen (S20) eines Überschreitens eines ersten Schwellwertes (②; ③) durch die Kenngröße;
c) Erfassen (S20) eines Überschreitens eines zweiten Schwellwertes (④), der größer als der erste Schwellwert ist, durch die Kenngröße; und
d) Erfassen (S30) eines Kontakts (t₃; t₄; x₀) des Werkzeugs auf Basis des Überschreitens des ersten Schwellwertes;
wobei unter einem Schleppfehler eine Abweichung eines, insbesondere erfassten, Ist-Wertes von einem, insbesondere vorgegebenen, Soll-Wert des Werkzeugs und/oder eines oder mehrerer Antriebe der Antriebsanordnung verstanden wird, wobei die Leistung eine, insbesondere aufgenommene, Leistung eines oder mehrerer Antriebe der Antriebsanordnung ist,
wobei in Schritt d) der Kontakt des Werkzeugs auf Basis des letzten Überschreitens des ersten Schwellwertes erfasst wird, falls anschließend ein Überschreiten des zweiten, größeren Schwellwertes durch die Kenngröße erfasst wird, wobei ein Zeitpunkt und/oder eine Position erfasst wird, bei dem die Kenngröße zuletzt den ersten Schwellwert überschritten hat.

2. Verfahren nach Anspruch 1, wobei wenigstens ein Schwellwert (②; ③, ④) auf Basis eines, insbesondere gleitenden, Mittel- oder Maximalwertes der Kenngröße ermittelt wird.

3. Verfahren nach einem der vorhergehenden Ansprüche, wobei wenigstens ein Schwellwert (②; ③, ④) während einer planmäßig kontaktfreien oder potentiell kontaktierenden Bewegung des Werkzeugs ermittelt wird.

4. Verfahren nach einem der vorhergehenden Ansprüche, wobei die Kenngröße einen Positions-, Geschwindigkeits- und/oder Beschleunigungsschleppfehler (Δ) aufweist.

5. Verfahren nach einem der vorhergehenden Ansprüche, wobei der Schleppfehler (Δ) eine Abweichung eines Ist-Wertes wenigstens eines Antriebs der Antriebsanordnung und/oder des Werkzeugs von einem Soll-Wert aufweist.

6. Verfahren nach einem der vorhergehenden Ansprüche, wobei die Kenngröße eine Leistung und/oder deren Änderung, insbesondere einen Stromwert (I) und/oder dessen Änderung, wenigstens eines Antriebs der Antriebsanordnung aufweist.

7. Verfahren nach einem der vorhergehenden Ansprüche, wobei eine Kontaktkraft (F) des Werkzeugs auf Basis einer Abweichung einer Ist-Position (x) von einer Kontakt-Position (x₀) ermittelt und/oder vorgegeben wird, bei welcher der Kontakt erfasst worden ist.

8. Verfahren nach dem vorhergehenden Anspruch, wobei die Kontaktkraft auf Basis eines von Null verschiedenen Kontaktkraft-Offsets (F₀) in der Kontakt-Position (x₀) ermittelt bzw. vorgegeben wird.

9. Verfahren nach dem vorhergehenden Anspruch, wobei eine Kontaktkraft-Kennlinie, auf deren Basis die Kontaktkraft des Werkzeugs ermittelt und/oder vorgegeben wird, kalibriert wird, wobei die Kontaktkraft-Kennlinie den Kontaktkraft-Offset aufweist.

10. Verfahren nach einem der vorhergehenden Ansprüche, wobei das Werkzeug eine, insbesondere verstellbare, Zangenbacke, insbesondere einer Greif- oder Schweißzange (30), aufweist.

11. Vorrichtung (20) zum Steuern einer Antriebsanordnung mit wenigstens einem Antrieb zum Bewegen eines, insbesondere robotergeführten, Werkzeugs (30), die zur Durchführung eines Verfahrens nach einem der vorhergehenden Ansprüche eingerichtet ist.

12. System mit einem, insbesondere robotergeführten, Werkzeug (30), einer Antriebsanordnung mit wenigstens einem Antrieb zum Bewegen des Werkzeugs, und einer Vorrichtung (20) nach dem vorhergehenden Anspruch.

13. Computerprogrammprodukt mit einem Programmcode, der auf einem von einem Computer lesbaren Medium gespeichert ist, zur Durchführung eines Verfahrens nach einem der vorhergehenden Ansprüche 1 bis 10.

## Claims

1. A method of controlling a drive arrangement comprising at least one drive for moving a robot-guided tool (30), wherein the tool is moved and the method comprises the steps of:
a) detecting (S10) a characteristic variable (①) which has a tracking error (Δ) and / or a power (I) and / a change thereof;
b) detecting (S20) an exceeding of a first threshold value (②; ③) by the characteristic variable;
c) detecting (S20) an exceeding of a second threshold value (④), which is greater than the first threshold value, by the characteristic variable; and
d) detecting (S30) a contact (t₃; t₄; x₀) of the tool on the basis of the exceeding of the first threshold value;
wherein a tracking error is understood to be a deviation of an actual value, in particular a detected actual value, from a target value, in particular from a specified target value, of the tool and / or of one or more drives of the drive arrangement,
wherein the power is a power of one or more drives of the drive arrangement, in particular a power consumed by one or more drives of the drive arrangement,
wherein, in step d), the contact of the tool is detected on the basis of the last exceeding of the first threshold value, if an exceeding of the second, larger threshold value is subsequently detected via the characteristic value, wherein a time and / or a position is detected at which the characteristic variable last exceeded the first threshold value.

2. The method according to claim 1, wherein at least one threshold value (②; ③, ④) is determined on the basis of an average value or a maximum value of the characteristic variable, in particular on the basis of a moving average value or a moving maximum value of the characteristic variable.

3. The method according to any one of the preceding claims, wherein at least one threshold value (②; ③, ④) is determined during a movement of the tool that is planned to be free of a contact or with potential contact.

4. The method according to any one of the preceding claims, wherein the characteristic variable comprises a position tracking error (Δ), a velocity tracking error (Δ) and / or an acceleration tracking error (Δ).

5. The method according to any one of the preceding claims, wherein the tracking error (Δ) comprises a deviation of an actual value of at least one drive of the drive arrangement and / or of the tool from a target value.

6. The method according to any one of the preceding claims, wherein the characteristic variable comprises a power and / or its change, in particular a current value (I) and / or its change, of at least one drive of the drive arrangement.

7. The method according to any one of the preceding claims, wherein a contact force (F) of the tool is determined and / or specified on the basis of a deviation of an actual position (x) from a contact position (x₀) at which the contact has been detected.

8. The method according to the preceding claim, wherein the contact force is determined or specified on the basis of a non-zero contact force offset (F₀) in the contact position (x₀).

9. The method according to the preceding claim, wherein a contact force characteristic curve, on the basis of which the contact force of the tool is determined and / or specified, is calibrated, wherein the contact force characteristic curve includes the contact force offset.

10. The method according to any one of the preceding claims, wherein the tool comprises a gripper jaw, in particular an adjustable gripper jaw, in particular of a gripping device or of an electrode holder (30).

11. A device (20) for controlling a drive arrangement comprising at least one drive for moving a tool (30), in particular a robot-guided tool (30), which is set up for carrying out a method according to any one of the preceding claims.

12. A system which comprises a tool (30), in particular a robot-guided tool (30), a drive arrangement with at least one drive for moving the tool, and a device (20) according to the preceding claim.

13. A computer program product which comprises a program code which is stored on a computer-readable medium, for carrying out a method according to any one of the preceding claims 1 to 10.

## Revendications

1. Procédé de commande d'un ensemble d'entraînement avec au moins un entraînement destiné à déplacer un outil guidé par un robot (30), dans lequel l'outil est déplacé et le procédé présente les étapes :
a) de détection (S10) d'une grandeur caractéristique (0), qui présente une erreur de poursuite (Δ) et/ou une puissance (I) et/ou leur modification ;
b) de détection (S20) d'un dépassement d'une première valeur de seuil (② ; ③) par la grandeur caractéristique ;
c) de détection (S20) d'un dépassement d'une deuxième valeur de seuil (④), qui est supérieure à la première valeur de seuil, par la grandeur caractéristique ; et
d) de détection (S30) d'un contact (t₃; t₄ ; X₀ ) de l'outil sur la base du dépassement de la première valeur de seuil ;
dans lequel on entend par erreur de poursuite un écart d'une valeur réelle, en particulier détectée, par rapport à une valeur de consigne en particulier spécifiée de l'outil et/ou d'un ou de plusieurs entraînements de l'ensemble d'entraînement, dans lequel la puissance est une puissance, en particulier absorbée, d'un ou de plusieurs entraînements de l'ensemble d'entraînement,
dans lequel, à l'étape d), le contact de l'outil est détecté sur la base du dernier dépassement de la première valeur de seuil, si un dépassement de la deuxième valeur de seuil supérieure par la grandeur caractéristique est ensuite détecté, dans lequel sont détectés un moment et/ou une position, pour lesquels la grandeur caractéristique a dépassé en dernier lieu la première valeur de seuil.

2. Procédé selon la revendication 1, dans lequel au moins une valeur de seuil (② ; ③, ④) est déterminée sur la base d'une valeur moyenne ou maximale, en particulier glissante, de la grandeur caractéristique.

3. Procédé selon l'une quelconque des revendications précédentes, dans lequel au moins une valeur de seuil (② ; ③, ④) est déterminée pendant un mouvement de l'outil planifié sans contact ou potentiellement en contact.

4. Procédé selon l'une quelconque des revendications précédentes, dans lequel la grandeur caractéristique présente une erreur de poursuite de position, de vitesse et/ou d'accélération (Δ).

5. Procédé selon l'une quelconque des revendications précédentes, dans lequel l'erreur de poursuite (Δ) présente un écart d'une valeur réelle d'au moins un entraînement de l'ensemble d'entraînement et/ou de l'outil par rapport à une valeur de consigne.

6. Procédé selon l'une quelconque des revendications précédentes, dans lequel la grandeur caractéristique est une puissance et/ou sa modification, en particulier une valeur de courant (I) et/ou sa modification, d'au moins un entraînement de l'ensemble d'entraînement.

7. Procédé selon l'une quelconque des revendications précédentes, dans lequel une force de contact (F) de l'outil sur la base d'un écart d'une position réelle (x) par rapport à une position de contact (x₀) est déterminée et/ou spécifiée, pour laquelle le contact a été détecté.

8. Procédé selon la revendication précédente, dans lequel la force de contact est déterminée ou spécifiée sur la base d'un décalage de force de contact (F₀) différent de zéro dans la position de contact (x₀).

9. Procédé selon la revendication précédente, dans lequel une courbe caractéristique de force de contact, sur la base de laquelle la force de contact de l'outil est déterminée et/ou spécifiée, est étalonnée, dans lequel la courbe caractéristique de force de contact présente le décalage de force de contact.

10. Procédé selon l'une quelconque des revendications précédentes, dans lequel l'outil présente une mâchoire de pince, en particulier ajustable, en particulier une pince de préhension ou de soudage (30).

11. Dispositif (20) de commande d'un ensemble d'entraînement avec au moins un entraînement destiné à déplacer un outil (30) en particulier guidé par un robot, qui est configuré pour mettre en œuvre un procédé selon l'une quelconque des revendications précédentes.

12. Système avec un outil (30) en particulier guidé par un robot, un ensemble d'entraînement avec au moins un entraînement destiné à déplacer l'outil, et un dispositif (20) selon la revendication précédente.

13. Produit-programme d'ordinateur avec un code de programme qui est stocké sur un support lisible par un ordinateur pour mettre en œuvre un procédé selon l'une quelconque des revendications précédentes 1 à 10.
